# FASCICULE DE BREVET EUROPEEN

(11) **EP 1 601 712 B1**
(45) Date de publication et mention de la délivrance du brevet: **17.12.2008**
(21) Numéro de dépôt: 04718636.6
(22) Date de dépôt: 09.03.2004
(51) Int. Cl.: C08J 5/04, B29B 9/14

(54) **ARTICLE POLYAMIDE RENFORCE PAR DES FIBRES LONGUES**
MIT LANGEN FASERN VERSTÄRKTER POLYAMIDGEGENSTAND
POLYAMIDE PIECE REINFORCED WITH LONG FIBRES

(30) Priorité: 11.03.2003 FR 0302957
(43) Date de publication de la demande: 07.12.2005
(73) Titulaire: Rhodia Engineering Plastics S.r.l., 20020 Ceriano Laghetto (IT)
(72) Inventeur: BRADLEY, Gérard, I-21047 Saronno (VA) (IT)
(74) Mandataire: Valentino, Cédric
(86) Numéro de dépôt international: PCT/EP2004/002488
(87) Numéro de publication internationale: WO 2004/081089

(56) Documents cités:
- WO-A-02/12373
- WO-A1-20/04001993
- FR-A- 2 743 077
- US-A- 5 700 556
- DATABASE WPI Week 199425 Derwent Publications Ltd., London, GB; AN 1994-206689 XP002284496 & JP 06 145509 A (ASAHI KASEI KK) 24 mai 1994 (1994-05-24)

## Description

La présente invention concerne des articles renforcés à base de matrice polyamide de haute fluidité en phase fondue et de fibres longues. Les articles selon l'invention présentent de bonnes propriétés mécaniques telle qu'une bonne résistance à la rupture, un bon aspect de surface et une bonne facilité de moulage.

### ART ANTERIEUR

Parmi les propriétés que l'on cherche souvent à améliorer pour un matériau polyamide destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aspect de surface, la densité. Le choix d'un matériau pour une application donnée est généralement guidé par le niveau de performance exigé vis-à-vis de certaines propriétés et par son coût. On cherche en effet toujours de nouveaux matériaux susceptibles de répondre à un cahier des charges en terme de performance et/ou de coût.

Il est connu de l'art antérieur d'utiliser des résines polyamides renforcées par des fibres longues, dans le but d'augmenter les propriétés mécaniques des matériaux obtenus. Pour réaliser de tels matériaux, on utilise habituellement une technique de pultrusion qui consiste à tirer au travers d'une filière chauffée des fibres continues imprégnées d'une résine thermoplastique fondue pour obtenir un jonc. Celui-ci est ensuite coupés en granulés. Cette méthode permet d'obtenir des fibres de la longueur des granulés. Toutefois, cette méthode utilisée avec des fibres et des polyamides classiques et linéaires conduit à l'obtention de granulés difficiles à mettre en oeuvre dans des procédés de moulage par injection. De plus, les articles obtenus présentent un mauvais aspect de surface.

### INVENTION

Il a été observé par la demanderesse que l'utilisation d'une matrice polyamide ayant une fluidité en phase fondue élevée en présence de fibres longues et/ou continues permettait de fabriquer des granulés utilisables pour la fabrication d'articles ayant de bonnes propriétés mécaniques telle qu'une bonne résistance à la rupture, un bon aspect de surface et une bonne facilité de moulage. De plus, il apparaît que les articles renforcés selon l'invention, lorsqu'ils sont soumis à des chocs, présentent un mode de rupture selon lequel les parties restent majoritairement assemblées. En effet, les fragments de ces articles renforcés restent attachés entre eux.

La présente invention a ainsi pour premier objet un granulé comprenant une matrice polyamide étoile et des fibres alignées de manière parallèle à la longueur du granulé susceptible d'être obtenu par un procédé de fabrication comprenant les étapes suivantes :
a) on met en présence au moins une matrice polyamide étoile à l'état fondu et des fibres choisies dans le groupe comprenant :
   i) les fibres continues, et/ou
   ii) les fibres ayant une longueur au moins égal à 80 % de la longueur des granulés, préférentiellement au moins égale à 100 % ;
   la matrice polyamide étoile étant obtenue par copolymérisation à partir d'un mélange de monomères comprenant :
   1) un composé multifonctionnel comprenant au moins trois fonctions réactives identiques choisies parmi la fonction amine et la fonction acide carboxylique ;
   2) des monomères de formules générales (IIa) et/ou (IIb) suivantes :

      X-R₂-Y (IIa)

      ou 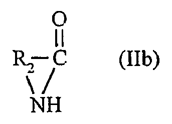
   3) éventuellement, des monomères de formule générale (III) suivante :

      Z-R₃-Z (III)
   dans lesquelles :
   Z représente une fonction identique à celle des fonctions réactives du composé multifonctionnel ;
   R₂, R₃ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes, tels que par exemple des atomes d'azote et d'oxygène ;
   Y est une fonction amine primaire quand X représente une fonction acide carboxylique, ou Y est une fonction acide carboxylique quand X représente une fonction amine primaire ;
b) on met en forme la composition obtenue à l'étape a) sous forme d'un jonc ; et
c) on coupe le jonc obtenu à l'étape b) à la dimension des granulés désirés.

L'invention concerne également le procédé de fabrication de granulés en tant que tel.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

Les procédés d'obtention des polyamides étoiles selon l'invention sont notamment décrits dans les documents FR 2743077 et FR 2779730. Ces procédés conduisent à la formation de chaînes macromoléculaires étoiles, en mélange avec éventuellement des chaînes macromoléculaires linéaires.

Dans le cas où l'on utilise un comonomère 3), la réaction de polymérisation est avantageusement effectuée jusqu'à l'atteinte de l'équilibre thermodynamique.

Les composés multifonctionnels, monomères à l'origine des chaînes macromoléculaires étoile, peuvent être choisis parmi les composés présentant une structure arborescente ou dendritique. Ils peuvent également être choisis parmi les composés représentés par la formule (I) :

R1⁅A-z]ₘ (IV)

dans laquelle :
R₁ est un radical hydrocarboné comprenant au moins deux atomes de carbone linéaire ou cyclique, aromatique ou aliphatique et pouvant comprendre des hétéroatomes ;
A est une liaison covalente ou un radical hydrocarboné aliphatique comprenant de 1 à 6 atomes de carbone ;
Z représente un radical amine primaire ou un radical acide carboxylique ; et m est un nombre entier compris entre 3 et 8 (bornes incluses).

Selon une caractéristique particulière de l'invention, le radical R₁ est soit un radical cycloaliphatique tel que le radical tétravalent de cyclohexanonyle, soit un radical 1,1,1-triyle-propane, 1,2,3-triyle-propane, et/ou leurs mélanges.

Comme autres radicaux R₁ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrite.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une liaison amide.

De préférence, les composés multifonctionnels sont choisis dans le groupe comprenant : la 2,2,6,6-tetrakis-(β-carboxyéthyl)-cyclohexanone, l'acide trimésique, la 2,4,6-tri-(acide aminocaproique)-1,3,5-triazine et la 4-aminoéthyle-1,8-octanediamine.

Le monomère de formules générales (IIa) et/ou (IIb) est préférentiellement choisi dans le groupe comprenant : l'ε-caprolactame et/ou l'aminoacide correspondant : l'acide aminocaproïque, l'acide para ou métaaminobenzoïque, l'acide amino-11-undécanoïque, le lauryllactame et/ou l'aminoacide correspondant, l'acide amino-12-dodécanoïque, la caprolactone, l'acide 6-hydroxy hexanoïque, leurs oligomères et/ou leurs mélanges.

Le monomère de formules générales (III) est préférentiellement choisi dans le groupe comprenant : l'acide succinique, l'acide adipique, l'acide téréphtalique, l'acide isophtalique, l'acide sébacique, l'acide azélaïque, l'acide dodécanoïque, les dimères d'acides gras, le di(β-éthylcarboxy) cyclohexanone, l'hexaméthylène diamine, la méthyl-5 pentaméthylène diamine, la métaxylilène diamine, l'isophorone diamine et le 1,4 diamine cyclohexane, et/ou leurs mélanges.

Il peut également être avantageux d'utiliser des composés limiteurs de chaînes, tel que des composés mono-fonctionnels.

Selon l'invention, on peut utiliser des fibres continues (i) bien connues de l'homme du métier ayant par définition généralement une longueur supérieure au centimètre, voir au mètre, et/ou des fibres (ii) ayant une longueur au moins égal à 80 % de la longueur des granulés souhaités, préférentiellement au moins égale à 100 %. Les fibres (ii) pourront être disposées de manière parallèle, de façon à obtenir un jonc, puis des granulés, comprenant des fibres alignées de manière parallèle à la longueur du jonc ou du granulé.

Dans l'étape a) on met en contact la matrice polyamide, déjà polymérisée, à l'état fondu et lesdites fibres. Il est possible de mélanger la composition obtenue.

Dans l'étape b) la mise en forme de la composition obtenue peut être effectuée par différentes méthodes qui préservent la longueur des fibres. Les méthodes de mise en forme préservant la longueur des fibres permettent de ne pas couper ou broyer lesdites fibres. Ces méthodes peuvent être par exemple la pultrusion, le moulage et l'extrusion notamment modifiée ne dégradant peu ou pas la longueur des fibres, tels que l'extrusion gainage (wire coating). Dans le cas d'une extrusion, l'extrudeuse est réglée de façon à ne pas ou peu couper les fibres, en adaptant, par exemple, les forces de cisaillement. On peut par exemple modifier le profil et/ou la vitesse de rotation de vis.

Selon l'invention, on obtient ainsi des granulés comprenant des fibres ayant approximativement une longueur au moins égal à 80 % de la longueur des granulés, préférentiellement au moins égale à 90 %, plus préférentiellement égale à 100 %.

L'invention concerne tout particulièrement un procédé de fabrication d'un granulé tel que défini précédemment dans lequel on met en forme un jonc à l'étape b) par pultrusion de fibres continues imprégnées par la matrice polyamide étoile.

Selon la présente invention, on entend généralement par granulé un cylindre ou un ruban ayant une section de forme géométrique variable, par exemple, circulaire régulière ou non ou de forme parallélépipédique régulière ou non. Les granulés selon la présente invention peuvent avoir des longueurs variables allant de quelques millimètres à quelques mètres. Dans ce dernier cas, les granulés sont appelés des joncs. Selon, un mode préférentiel de l'invention, les granulés on généralement une longueur moyenne de 0,5 mm à 30 mm, préférentiellement de 1 à 20 mm, particulièrement de 3 à 15 mm et tout particulièrement aux alentours de 9 à 10 mm.

La matière constituant les fibres est préférentiellement choisie dans le groupe comprenant : le verre, le carbone, le graphite, la céramique, l'aramide, l'acier, l'aluminium et le tungsten. Les granulés selon l'invention peuvent comprendre un ou plusieurs fibres constituées de matières différentes. Ces fibres peuvent être de diamètres variables. Généralement, ces fibres possèdent un diamètre moyen de 1 à 25 µm.

La proportion en poids des fibres par rapport au poids total du granulé peut être de 1 à 99 %, généralement de 5 à 80 %, préférentiellement de 10 à 60 %, particulièrement de 20 à 50 %.

Les granulés de l'invention peuvent également comporter d'autres composés, tels que par exemple des composés de stabilisation, de pigmentation, d'ignifugation, de catalyse et d'autres composés de renfort. Elles peuvent également comporter des charges minérales, telles que du kaolin, de la wollastonite, du talc, des nanoparticules ou des fibres de renfort telle que des fibres classiques de verre ou de carbone ou des fibres minérales. Les granulés peuvent également comprendre des fibres courtes ayant une longueur moyenne comprise entre 100 et 400 µm.

La présente invention concerne également un procédé de fabrication d'un article comprenant les étapes suivantes :
a) on fond au moins des granulés de l'invention tels que définis précédemment pour obtenir une matière fondue ;
b) on met en forme la matière fondue obtenue à l'étape a) pour obtenir un article.

Il existe plusieurs techniques connues de l'homme du métier pour fabriquer ces articles. Généralement, les pièces moulées sont réalisées par fusion des granulés et alimentation de la composition à l'état fondu dans des dispositifs tels que le moulage, l'injection, l'injection-gaz, le moulage par injection, l'extrusion et l'extrusion-soufflage, par exemple.

Il est également possible selon l'invention de mélanger les granulés avec d'autres granulés à base de matrices thermoplastiques renforcés ou non, pour former la matière fondue. Cette matrice thermoplastique peut être composée d'au moins un polymère choisi dans le groupe comprenant : les polyamides, tel que le polyamide 6, 66 et/ou le polyamide étoile selon l'invention, les polyesters, les polypropylènes, les polyéthylènes, les polyéthers, les copolymères (méth)acrylate-butadiène-styrène (ABS), ainsi que les copolymères et/ou mélanges.

Ainsi, on peut mélanger par exemple des granulés selon l'invention et des granulés de polyamide renforcés, par exemple par des fibres courtes, ou non-renforcés.

La présente invention a également pour objet un procédé de fabrication continu d'un article comprenant les étapes suivantes :
a) on met en contact au moins une matrice polyamide étoile à l'état fondu telle que définie précédemment avec des fibres continues ou des fibres ayant une longueur moyenne supérieure à 3 mm, préférentiellement 5 mm, plus préférentiellement 10 mm ; et
b) on met en forme la composition obtenue précédemment avant sa solidification par un dispositif de moulage par injection pour obtenir ledit article.

Pour ce faire, on peut notamment utiliser un procédé continu d'extrusion et de moulage par injection. Comme mentionné précédemment, l'extrudeuse peut être réglée de façon à ne pas ou peu couper les fibres, préférentiellement, pour obtenir des fibres ayant au moins une longueur moyenne supérieure ou égale à 0,3 mm, plus préférentiellement supérieure ou égale à 0,5 mm. Dans ce procédé continu, la composition est directement mise en forme pour obtenir un article sans passer par des matériaux intermédiaires tels que des granulés.

Ledit article peut comprendre une proportion en poids de fibres comprises entre 1 et 80 %, préférentiellement entre 5 et 70 %, plus préférentiellement entre 5 et 60 %.

La présente invention a également pour objet un procédé de fabrication d'articles comprenant une étape d'enroulement de fibres (filament winding) comprenant les étapes suivantes :
a) on met en contact au moins une matrice polyamide étoile à l'état fondu telle que définie précédemment avec des fibres continues, de façon à recouvrir les fibres par ladite matrice ; et
b) on enroule les fibres obtenues à l'étape a) sur un mandrin en rotation.

Les fibres recouvertes par la matrice polyamide peuvent notamment prendre la forme d'un ruban. La technique d'enroulement de fibres (filament winding) permet entre autres la fabrication de tubes, conduits ou citernes.

Les articles de l'invention peuvent être par exemple des articles pour l'industrie automobile, en particulier pour la fabrication de pièces de carrosserie, des composants électriques et des accessoires pour différentes activités telles que les activités sportives, par exemple.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnement peuvent notamment être envisagé par une personne au fait du domaine technique concerné sur la base de ses propres connaissances générales.

Le terme et/ou inclut les significations et, ou ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### 1) Matériaux composites

Des matériaux composites à base de polyamides renforcés par des fibres de verre sont préparés à partir des produits suivants :
- F1 : Fibres de verre pour pultrusion : Fibres de verre continues EC17 4588 vendu par PPG.
- F2 : Fibres de verre pour extrusion : Fibres de verre ayant une longueur de 4,5 mm et un diamètre de 10 µm.
- P1 : Polyamide étoile, obtenu par copolymérisation à partir de caprolactame en présence de 0,41 mol de 2,2,6,6-tetrakis-(β-carboxyéthyl)-cyclohexanone en moles de composé, selon un procédé décrit dans le document FR 2743077, d'indice de fluidité en phase fondue mesuré à 275°C sous 325 g de charge de 30 g/10 minutes, selon la norme ISO1133.
- P2 : Polyamide étoile, obtenu par copolymérisation à partir de caprolactame en présence de 0,48 mol de 2,2,6,6-tetrakis-(β-carboxyéthyl)-cyclohexanone en moles de composé, selon un procédé décrit dans le document FR 2743077, d'indice de fluidité en phase fondue mesuré à 275°C sous 325 g de charge de 45 g/10 minutes (ISO1133).
- P3 : Polyamide 6 linéaire obtenu par polymérisation de caprolactame, d'indice de fluidité en phase fondue mesuré à 275°C sous 325 g de charge de 10 g/10 minutes (ISO1133).

On imprègne 50% en poids de polyamide fondu avec 50 % en poids de fibres de verres continues pour former une mixture. On procède ensuite à une pultrusion pour produire des fibres de verre continues couvertes par le polyamide. Un jonc est ainsi obtenu. Ce jonc est alors coupé pour former des granulés de 9 millimètres dans lesquelles la longueur des fibres de verre est égale à la longueur des granulés.

Pour obtenir des granulée comprenant des fibres de verres courtes, on utilise une extrudeuse classique bi-vis du type Werner&Pfleiderer ZSK 70. Profile de température en degré Celsius (Zone 1 : 240 ; Zone 2 : 245 ; Zone 3 : 250 ; Zone 4 : 255 ; Zone 5 : 260 ; Zone 6 : 265) ; Vitesse de rotation des vis : 330 rpm.

Les granulés obtenus sont mentionnés dans le tableau suivant :

**Tableau 1**

| **GRANULES** | | **A1** | **C1** | **D1** | **E1** | **G1** |
|---|---|---|---|---|---|---|
| | | | | | | |
| **Polyamide étoile** | % | P1 :70 | P2 :50 | P2 :50 | | |
| **Polyamide 6 linéaire** | % | | | | P3 : 70 | P3 : 50 |
| **Fibres de verre** | % | F2 : 30 | F2 : 50 | F1 : 50 | F2 : 30 | F1 : 50 |
| **Mode préparatoire** | - | Extrusion | Extrusion | Pultrusion | Extrusion | Pultrusion |
| **Longueur moyenne des fibres de verre** | µm | 374 | 350 | 9000 | 360 | 9000 |
| **Longueur moyenne des granulés** | mm | 3 | 3 | 9 | 3 | 9 |

Pour obtenir, des articles comprenant une proportion plus faible de fibres de verre, on mélange les granulés obtenus précédemment par pultrusion avec des granulés de polymère ne comprenant pas de fibres de verre, par un mélangeur mécanique.

Les mélanges sont obtenus selon le tableau suivant :

**Tableau 2**

| **MELANGE** | **% en poids** | **B1** | **F1** |
|---|---|---|---|
| | | | |
| **Granulés D1 de 9 mm (Fibres longues)** | % | 60 | - |
| **Granulés G1 de 9 mm (Fibres longues)** | % | - | 60 |
| **Granulés polyamide 3 mm** | % | P2 : 40 | P3 : 40 |

Les granulés ou mélanges A1 à G1 permettent d'obtenir respectivement les articles A à G.

Le moulage par injection est effectué à partir des granulés A1, C1, D1, E1 et G1 ou à partir des mélanges B1 et F1 par la machine Demag Ergotech 50-270 utilisée dans des conditions standards : Profile de température en degré Celsius (Zone 1 : 250 ; Zone 2 : 255 ; Zone 3 : 255 ; Zone 4 : 260) ; Vitesse d'injection : 70 mm/s ; Pression d'injection : voir tableau 3 ; Vitesse de rotation des vis : 70 rpm ; Température de moulage : 80°C).

Les compositions finales des articles et leurs propriétés mécaniques sont répertoriées sur le tableau suivant. Les pourcentages (%) dans les compositions sont en poids par rapport au total de la composition.

**Tableau 3**

| **ARTICLES** | | **B** | **C** | **D** | **F** | **G** |
|---|---|---|---|---|---|---|
| | | | | | | |
| **Polyamide étoile** | % | P2 :70 | P2 :50 | P2 :50 | | |
| **Polyamide 6 linéaire** | % | | | | P3 : 70 | P3 : 50 |
| **Fibres de verre** | % | 30 | 50 | 50 | 30 | 50 |
| | | | | | | |
| Contrainte à la rupture | N/mm² | 143 | 214 | 218 | 165 | 193 |
| Elongation à la rupture | % | 1,9 | 2,1 | 1,9 | 2,1 | 1,6 |
| Module de tension | N/mm² | 8620 | 16000 | 15600 | 10000 | 15800 |
| Choc entaillé Charpy | KJ/m² | 20,2 | 14,6 | 36,6 | 17,1 | 22,0 |
| Force maximale | KN | 7,0 | 9,4 | 10,7 | 7,2 | 8,1 |
| Energie totale de rupture | J | 50,3 | 52,2 | 74,1 | 40,0 | 62,3 |
| Mode de rupture | - | non-explosif | non-explosif | non-explosif | non-explosif | non-explosif |
| Aspect de surface | - | Bon | Bon | Bon | Mauvais | Mauvais |
| Pression d'injection | Bar | 150 | 150 | 150 | 210 | 245 |

On observe notamment que les articles renforcés selon l'invention comprennent deux populations de fibres de verre se différenciant par leur longueur moyenne : approximativement 50 % des fibres présentent une longueur moyenne de 0,5 mm et approximativement 50 % des fibres présentent une longueur moyenne de 2 mm.

Les propriétés mécaniques des articles sont évaluées comme suit :
- Contrainte à la rupture selon la norme ISO 527.
- Elongation à la rupture selon la norme ISO 527.
- Module de tension selon la norme ISO 527.
- Résistance au choc Charpy entaillé selon la norme ISO 179/1eA.
- Force maximale et énergie totale de rupture (drop weight impact) selon la norme ISO 6603-2 sur des spécimens de 3 mm d'épaisseur. Le mode de rupture est dit explosif lorsqu'on observe un détachement de morceaux de la pièce plastique.
- Aspect de surface selon une appréciation visuelle afin de déterminer si l'aspect de surface est bon ou mauvais.
- Pression d'injection requise pour le moulage par injection.

Les propriétés mécaniques sont mesurées après conditionnement de l'éprouvette à 23°C à l'état sec brut de moulage dans un container à l'abri de l'humidité, selon la norme ISO 1874-2.

Les compositions selon la présente invention permettent ainsi d'obtenir des articles moulés ayant des propriétés mécaniques améliorées, notamment au niveau de résistance aux chocs et à la rupture, tout en ayant un bon aspect de surface et une bonne facilité de moulage.

De plus, il apparaît que les modes de rupture sont complètement différents selon les articles. Selon l'art antérieur, lorsque l'article A subit le test d'impact de poids selon la norme ISO 6603-2 on observe une explosion dudit article et le détachements de fragments de cet article. Selon l'invention, lorsque l'article A subit le même test d'impact de poids, on n'observe pas une explosion dudit article, les parties de cet article étant restées assemblées.

### 2) Mélange

Des tests ont également été effectués pour montrer les avantages, au niveau des propriétés mécaniques, d'un article comprenant des fibres longues et des fibres courtes.

Des granulés d'une longueur de 9 mm comprenant une forte concentration de fibres de verres longues sont ajoutés à des granulés d'une longueur de 3 mm comprenant des fibres de verre courtes, dans un mélangeur mécanique. Le polyamide étoile P1 a également été ajouté au mélangeur mécanique de façon à ajuster la teneur en fibres de verre.

Dans ces essais, les compositions finales des articles comprennent ainsi 30 % en poids de fibres de verre.

Le moulage par injection pour obtenir les articles est mentionné précédemment.

Les compositions des articles sont répertoriées dans le tableau suivant. Les pourcentages (%) dans les compositions sont en poids par rapport au total de la composition finale.

**Tableau 4**

| **ARTICLES** | | **A** | **H** | **I** | **J** | **K** | **B** |
|---|---|---|---|---|---|---|---|
| | | | | | | | |
| **Granulés A1 de 3 mm (Fibres courtes)** | % | 100 | 83,5 | 67,0 | 50,5 | 34,0 | - |
| **Granulés D1 de 9 mm (Fibres longues)** | % | - | 10,0 | 20,0 | 30,0 | 40,0 | - |
| **Polyamide P1** | % | - | 6,5 | 13,0 | 19,5 | 26,0 | - |
| Fibres de verre courtes provenant des granulés A1 | % | 30 | 25 | 20 | 15 | 10 | - |
| Fibres de verre longues provenant des granulés D1 | % | - | 5 | 10 | 15 | 20 | 30 |
| | | | | | | | |
| Choc entaillé Charpy | KJ/m² | 10,2 | 10,8 | 12,1 | 13,8 | 14,6 | 20,2 |
| Energie totale de rupture | J | 40,1 | 40,1 | 42,3 | 44,6 | 45,8 | 50,3 |

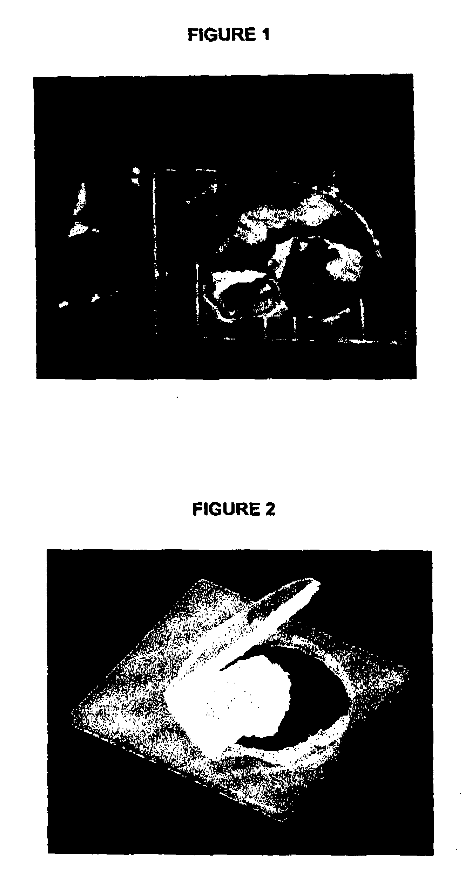

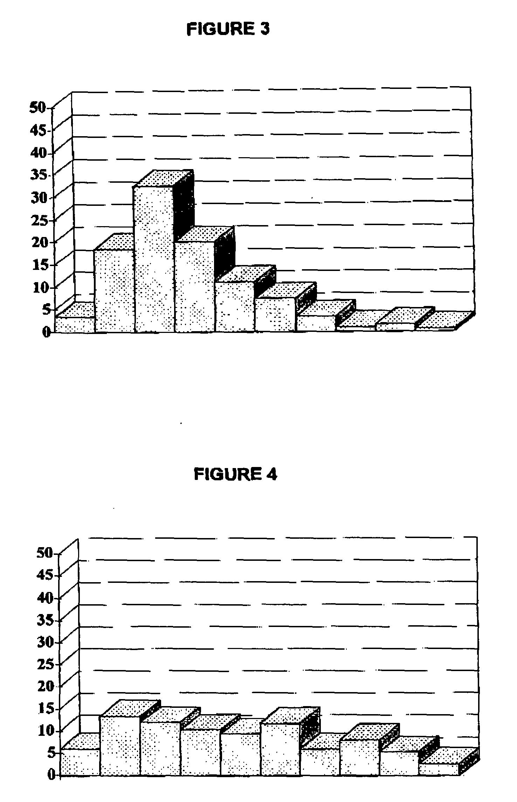

## Revendications

1. Granulé comprenant une matrice polyamide étoile et des fibres alignées de manière parallèle à la longueur du granulé susceptible d'être obtenu par un procédé de fabrication comprenant les étapes suivantes :
a) on met en présence au moins une matrice polyamide étoile à l'état fondu et des fibres choisies dans le groupe comprenant :
i) les fibres continues, et/ou
ii) les fibres ayant une longueur au moins égal à 80 % de la longueur des granulés, préférentiellement au moins égale à 100 % ;
la matrice polyamide étoile étant obtenue par copolymérisation à partir d'un mélange de monomères comprenant :
1) un composé multifonctionnel comprenant au moins trois fonctions réactives identiques choisies parmi la fonction amine et la fonction acide carboxylique ;
2) des monomères de formules générales (IIa) et/ou (IIb) suivantes :
X-R₂-Y (IIa)
ou 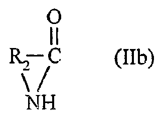
3) éventuellement, des monomères de formule générale (III) suivante:
Z-R₃-Z (III)
dans lesquelles :
Z représente une fonction identique à celle des fonctions réactives du composé multifonctionnel ;
R₂, R₃ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes, tels des atomes d'azote et d'oxygène ;
Y est une fonction amine primaire quand X représente une fonction acide carboxylique, ou Y est une fonction acide carboxylique quand X représente une fonction amine primaire ;
b) on met en forme la composition obtenue à l'étape a) sous forme d'un jonc ; et
c) on coupe le jonc obtenu à l'étape b) à la dimension des granulés désirés.

2. Granulé selon la revendication 1, **caractérisé en ce que** le composé multifonctionnel est représenté par la formule (I) :
R1⁅A-z]ₘ (I)
dans laquelle :
R₁ est un radical hydrocarboné comprenant au moins deux atomes de carbone linéaire ou cyclique, aromatique ou aliphatique et pouvant comprendre des hétéroatomes ;
A est une liaison covalente ou un radical hydrocarboné aliphatique comprenant de 1 à 6 atomes de carbone ;
Z représente un radical amine primaire ou un groupement carboxylique ; et
m est un nombre entier compris entre 3 et 8.

3. Granulé selon la revendication 1 ou 2, **caractérisé en ce que** le composé multifonctionnel est choisi dans le groupe comprenant : la 2,2,6,6-tetrakis-(β-carboxyéthyl)-cyclohexanone, l'acide trimésique, la 2,4,6-tri-(acide aminocaproique)-1,3,5-triazine, la 4-aminoéthyle-1,8-octanediamine, et/ou leurs mélanges.

4. Granulé selon l'une quelconque des revendications 1 à 3, **caractérisé ce que** le monomère de formules générales (IIa) et/ou (IIb) est choisi dans le groupe comprenant: l'ε-caprolactame et/ou l'aminoacide correspondant : l'acide aminocaproïque, l'acide para ou métaaminobenzoïque, l'acide amino-11-undécanoïque, le lauryllactame et/ou l'aminoacide correspondant, l'acide amino-12-dodécanoïque, la caprolactone, l'acide 6-hydroxy hexanoïque, leurs oligomères et/ou leurs mélanges.

5. Granulé selon l'une quelconque des revendications 1 à 4, **caractérisé ce que** le monomère de formules générales (III) est choisi dans le groupe comprenant : l'acide succinique, l'acide adipique, l'acide téréphtalique, l'acide isophtalique, l'acide sébacique, l'acide azélaïque, l'acide dodécanoïque, les dimères d'acides gras, le di(β-éthylcarboxy) cyclohexanone, l'hexaméthylène diamine, la méthyl-5 pentaméthylène diamine, la métaxylilène diamine, l'isophorone diamine et le 1,4 diamine cyclohexane, et/ou leurs mélanges.

6. Granulé selon l'une quelconque des revendications 1 à 5, **caractérisé en ce que** ledit granulé a une longueur moyenne de 0,5 à 30 mm, préférentiellement de 3 à 15 mm.

7. Granulé selon l'une quelconque des revendications 1 à 7, **caractérisé en ce que** la matière constituant les fibres est choisie dans le groupe comprenant : le verre, le carbone, le graphite, la céramique, l'aramide, l'acier, l'aluminium et le tungsten.

8. Granulé selon l'une quelconque des revendications 1 à 7, **caractérisé en ce que** la proportion en poids de fibres par rapport au granulé est comprise entre 5 et 80 %.

9. Granulé selon l'une quelconque des revendications 1 à 8, **caractérisé en ce que** la mise en forme de jonc de la composition à l'étape b) est effectuée par une méthode de pultrusion, de moulage ou d'extrusion, tel que l'extrusion gainage.

10. Procédé de fabrication d'un article comprenant les étapes suivantes :
a) on fond au moins des granulés selon l'une quelconque des revendications 1 à 9 pour obtenir une matière fondue ; et
b) on met en forme la matière fondue obtenue à l'étape a) pour obtenir un article.

11. Procédé selon la revendication 10, **caractérisé en ce que** la matière fondue à l'étape a) est obtenue par mélange de granulés selon l'une quelconque des revendications 1 à 9 et de granulés à base de matrice thermoplastique.

12. Procédé selon l'une quelconque des revendications 10 à 11, **caractérisé en ce que** la matière fondue est mise en forme par l'un des dispositifs choisis dans le groupe comprenant : le moulage, l'injection, l'injection-gaz, le moulage par injection, l'extrusion et l'extrusion-soufflage.

13. Procédé de fabrication continu d'un article comprenant les étapes suivantes :
a) on met en contact au moins une matrice polyamide étoile à l'état fondu telle que définie dans l'une quelconque des revendications 1 à 5 avec des fibres continues ou des fibres ayant une longueur moyenne supérieure à 3 mm ; et
b) on met en forme la composition obtenue précédemment avant sa solidification par un dispositif de moulage par injection pour obtenir ledit article.

14. Procédé de fabrication d'un article comprenant une étape d'enroulement de fibres (filament winding) comprenant les étapes suivantes :
a) on met en contact au moins une matrice polyamide étoile à l'état fondu telle que définie dans l'une quelconque des revendications 1 à 5 avec des fibres continues, de façon à recouvrir les fibres par ladite matrice ; et
b) on enroule les fibres obtenues à l'étape a) sur un mandrin en rotation.

## Claims

1. Granule comprising a star polyamide matrix and fibres aligned parallel to the length of the granule, which can be obtained by a manufacturing process comprising the following steps:
a) at least one star polyamide matrix is brought in the melt state into contact with fibres chosen from the group comprising:
i) continuous fibres; and/or
ii) fibres having a length at least equal to 80%, preferably at least equal to 100%, of the length of the granules,
the star polyamide matrix being obtained by copolymerization using a monomer mixture comprising:
1) a multifunctional compound comprising at least three identical reactive functional groups chosen from amine functional groups and carboxylic acid functional groups;
2) monomers of the following general formulae (IIa) and/or (IIb):
X-R₂-Y (IIa)
or 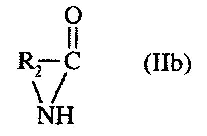
3) optionally, monomers of the following general formula (III):
Z-R₃-Z (III)
in which:
Z represents a functional group identical to that of the reactive functional groups of the multifunctional compound;
R₂, R₃, which are identical or different, represent substituted or unsubstituted, aliphatic, cycloaliphatic or aromatic, hydrocarbon radicals containing 2 to 20 carbon atoms and possibly including heteroatoms, such as for example nitrogen and oxygen atoms;
Y is a primary amine functional group when X represents a carboxylic acid functional group, or Y is a carboxylic acid functional group when X represents a primary amine functional group;
b) the composition obtained in step a) is formed into a rod; and
c) the rod obtained in step b) is cut to the length of the granules desired.

2. Granule according to Claim 1, **characterized in that** the multifunctional compound is represented by the formula (I):
R1⁅A-z]ₘ (I)
in which:
R₁ is an aromatic or aliphatic, linear or cyclic, hydrocarbon radical containing at least two carbon atoms and possibly including heteroatoms;
A is a covalent bond or an aliphatic hydrocarbon radical containing 1 to 6 carbon atoms;
Z represents a primary amine radical or a carboxylic acid radical; and
m is an integer between 3 and 8.

3. Granule according to Claim 1 or 2, **characterized in that** the multifunctional compound is chosen from the group comprising: 2,2,6,6-tetrakis(β-carboxyethyl)cyclohexanone, trimesic acid, 2,4,6-tri(aminocaproic acid)-1,3,5-triazine and 4-aminoethyl-1,8-octanediamine, and/or mixtures thereof.

4. Granule according to any one of Claims 1 to 3, **characterized in that** the monomer of general formulae (IIa) and/or (IIb) is chosen from the group comprising ε-caprolactam and/or the corresponding amino acid: aminocaproic acid, para-aminobenzoic or meta-aminobenzoic acid, 11-aminoundecanoic acid, lauryllactam and/or the corresponding amino acid, 12-aminododecanoic acid, caprolactone, 6-hydroxyhexanoic acid, oligomers thereof and/or mixtures thereof.

5. Granule according to any one of Claims 1 to 4, **characterized in that** the monomer of general formula (III) is chosen from the group comprising: succinic acid, adipic acid, terephthalic acid, isophthalic acid, sebacic acid, azelic acid, dodecanoic acid, dimers of fatty acids, di(β-ethylcarboxy)cyclohexanone, hexamethylenediamine, 5-methyl pentamethylenediamine, metaxylylenediamine, isophorone diamine and 1,4-cyclohexanediamine, and/or mixtures thereof.

6. Granule according to any one of Claims 1 to 5, **characterized in that** the said granule has a mean length of 0.5 to 30 mm, preferably 3 to 15 mm.

7. Granule according to any one of Claims 1 to 7, **characterized in that** the constituent material of the fibres is chosen from the group comprising: glass, carbon, graphite, ceramic, aramid, steel, aluminium and tungsten.

8. Granule according to any one of Claims 1 to 7, **characterized in that** the proportion by weight of fibres relative to the granule is between 5 and 80%.

9. Granule according to any one of Claims 1 to 8, **characterized in that** the composition is formed into a rod in step b) by a pultrusion, moulding or extrusion method, such as sheath extrusion.

10. Process for manufacturing an article comprising the following steps:
a) at least granules according to any one of Claims 1 to 9 are melted in order to obtain a melt;
b) the melt obtained in step a) undergoes a forming operation in order to obtain an article.

11. Process according to Claim 10, **characterized in that** the melt in step a) is obtained by blending granules according to any one of Claims 1 to 9 with granules based on a thermoplastic matrix.

12. Process according to either of Claims 10 and 11, **characterized in that** the melt undergoes a forming operation using one of the devices chosen from the group comprising those for transfer moulding, injection moulding, gas injection moulding, extrusion and extrusion-blow moulding.

13. Continuous process for manufacturing an article, comprising the following steps:
a) at least one star polyamide matrix as defined in any one of Claims 1 to 5 is brought in the melt state into contact with continuous fibres or fibres having a mean length greater than 3 mm; and
b) the composition obtained above undergoes a forming operation before it solidifies using an injection moulding device to obtain the said article.

14. Process for manufacturing articles that includes a filament winding step comprising the following steps:
a) at least one star polyamide matrix as defined in any one of Claims 1 to 5 is brought in the melt state into contact with continuous fibres so as to cover the fibres with the said matrix; and
b) the fibres obtained in step a) are wound onto a rotating mandrel.

## Patentansprüche

1. Granulatkorn mit einer Sternpolyamidmatrix und parallel zur Länge des Granulatkorns ausgerichteten Fasern, das nach einem Herstellungsverfahren erhältlich ist, bei dem man:
a) mindestens eine Sternpolyamidmatrix in schmelzflüssigem Zustand mit Fasern aus der Gruppe bestehend aus
i) Endlosfasern und/oder
ii) Fasern mit einer Länge von mindestens 80%, vorzugsweise mindestens gleich 100%, der Länge der Granulatkörner;
in Berührung bringt,
wobei die Sternpolymermatrix durch Copolymerisation einer Monomerenmischung, enthaltend:
1) eine multifunktionelle Verbindung mit mindestens drei identischen reaktiven Funktionen, die unter der Aminfunktion und der Carbonsäurefunktion ausgewählt sind:
2) Monomere der folgenden allgemeinen Formeln (IIa) und/oder (IIb):
X-R₂-Y (IIa)
oder 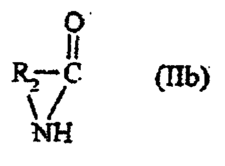
3) gegebenenfalls Monomere der folgenden allgemeinen Formel (III):
Z-R₃-Z (III)
worin:
Z für eine Funktion steht, die mit den reaktiven Funktionen der multifunktionellen Verbindung identisch ist;
R₂ und R₃ gleich oder verschieden sind und für substituierte oder unsubstituierte, aliphatische, cycloaliphatische oder aromatische
Kohlenwasserstoffreste, die 2 bis 20 Kohlenstoffatome aufweisen und Heteroatome wie Stickstoff- oder Sauerstoffatome enthalten können, stehen;
Y für eine primäre Aminfunktion steht, wenn X für eine Carbonsäurefunktion steht, oder Y für eine Carbonsäurefunktion steht, wenn X für eine primäre Aminfunktion steht;
erhalten wird;
b) die aus Schritt a) erhaltene Zusammensetzung zu einem Strang formt und
c) den aus Schritt b) erhaltenen Strang auf die Länge der gewünschten Granulatkörner schneidet.

2. Granulatkorn nach Anspruch 1, **dadurch gekennzeichnet, daß** die multifunktionelle Verbindung durch die Formel (I) wiedergegeben wird:
R1⁅A-z]ₘ (I)
worin:
R₁ für einen aromatischen oder aliphatischen, linearen oder cyclischen Kohlenwasserstoffrest steht, der mindestens zwei Kohlenstoffatome aufweist und Heteroatome enthalten kann;
A für eine kovalente Bindung oder einen aliphatischen Kohlenwasserstoffrest mit 1 bis 6 Kohlenstoffatomen steht;
Z für einen primären Aminrest oder eine Carboxylgruppe steht und
m für eine ganze Zahl zwischen 3 und 8 steht.

3. Granulatkorn nach Anspruch 1 oder 2, **dadurch gekennzeichnet, daß** die multifunktionelle Verbindung aus der Gruppe bestehend aus 2,2,6,6-Tetrakis(β-carboxyethyl)cyclohexanon, Trimesinsäure, 2,4,6-Tri(aminocapronsäure)-1,3,5-triazin, 4-Aminoethyl-1,8-octandiamin und/oder Mischungen davon ausgewählt ist.

4. Granulatkorn nach einem der Ansprüche 1 bis 3, **dadurch gekennzeichnet, daß** das Monomer der allgemeinen Formeln (IIa) und/oder (IIb) aus der Gruppe bestehend aus ε-Caprolactam und/oder der entsprechenden Aminosäure: Aminocapronsäure, para- oder meta-Aminobenzoesäure, 11-Aminoundecansäure, Lauryllactam und/oder der ensprechenden Aminosäure, 12-Aminododecansäure, Caprolacton, 6-Hydroxyhexansäure, Oligomeren davon und/oder Mischungen davon ausgewählt ist.

5. Granulatkorn nach einem der Ansprüche 1 bis 4, **dadurch gekennzeichnet, daß** das Monomer der allgemeinen Formel (III) aus der Gruppe bestehend aus Bernsteinsäure, Adipinsäure, Terephthalsäure, Isophthalsäure, Sebacinsäure, Azelainsäure, Dodecansäure, Fettsäuredimeren, Di(β-ethylcarboxy)cyclohexanon, Hexanmethylendiamin, 5-Methylpentamethylendiamin, meta-Xylylendiamin, Isophorondiamin und 1,4-Cyclohexandiamin und/oder Mischungen davon ausgewählt ist.

6. Granulatkorn nach einem der Ansprüche 1 bis 5, **dadurch gekennzeichnet, daß** das Granulatkorn eine mittlere Länge von 0,5 bis 30 mm, vorzugsweise von 3 bis 15 mm, aufweist.

7. Granulatkorn nach einem der Ansprüche 1 bis 6, **dadurch gekennzeichnet, daß** das Material, aus dem die Fasern bestehen, aus der Gruppe bestehend aus Glas, Kohlenstoff, Graphit, Keramik, Aramid, Stahl, Aluminium und Wolfram ausgewählt sind.

8. Granulatkorn nach einem der Ansprüche 1 bis 7, **dadurch gekennzeichnet, daß** der Gewichtsanteil an Fasern, bezogen auf das Granulatkorn, zwischen 5 und 80% liegt.

9. Granulatkorn nach einem der Ansprüche 1 bis 8, **dadurch gekennzeichnet, daß** das Formen der Zusammensetzung aus Schritt b) zu einem Strang nach einer Pultrusions-, Abform- oder Extrusionsmethode, wie Mantelextrusion, erfolgt.

10. Verfahren zur Herstellung eines Gegenstands, bei dem man:
a) mindestens Granulatkörner nach einem der Ansprüche 1 bis 9 aufschmilzt, wobei man eine schmelzflüssige Masse erhält; und
b) die aus Schritt a) erhaltene schmelzflüssige Masse zu einem Artikel formt.

11. Verfahren nach Anspruch 10, **dadurch gekennzeichnet, daß** man das schmelzflüssige Material aus Schritt a) durch Mischen von Granulatkörnern nach einem der Ansprüche 1 bis 9 und Granulatkörnern auf Basis einer thermoplastischen Matrix erhält.

12. Verfahren nach einem der Ansprüche 10 bis 11, **dadurch gekennzeichnet, daß** man die schmelzflüssige Masse mit einer der unter Vorrichtungen zum Abformen, zur Injektion, zur Gasinjektion, zum Spritzguß, zur Extrusion und zum Extrusionsblasformen ausgewählten Vorrichtung formt.

13. Verfahren zur kontinuierlichen Herstellung eines Gegenstands, bei dem man:
a) mindestens eine Sternpolyamidmatrix in schmelzflüssigem Zustand gemäß einem der Ansprüche 1 bis 5 mit Endlosfasern oder Fasern mit einer mittleren Länge von mehr als 3 mm in Berührung bringt und
b) die oben erhaltene Zusammensetzung vor ihrer Verfestigung mit einer Spritzgußvorrichtung zu dem Gegenstand formt.

14. Verfahren zur Herstellung eines Gegenstands mit einem Wickelschritt (Filament-Winding-Schritt), bei dem man:
a) mindestens eine Sternpolyamidmatrix in schmelzflüssigem Zustand gemäß einem der Ansprüche 1 bis 5 so mit Endlosfasern in Berührung bringt, daß die Fasern mit der Matrix bedeckt werden; und
b) die aus Schritt a) erhaltenen Fasern auf einem sich drehenden Dorn aufwickelt.
